# EUROPEAN PATENT SPECIFICATION

(11) **EP 3 834 357 B1**
(45) Date of publication and mention of the grant of the patent: **10.05.2023**
(21) Application number: 19847810.9
(22) Date of filing: 09.08.2019
(51) Int. Cl.: H04L 5/00, H04W 72/04, H04W 4/40, H04J 13/00, H04J 13/12, H04L 27/26, H04W 76/14, H04W 64/00

(54) **GENERATION OF DM-RS FOR SIDELINK BASED ON LOCATION OF UE**
ERZEUGUNG VON DM-RS FÜR SIDELINK AUF DER GRUNDLAGE DES STANDORTES EINES BENUTZERGERÄTS
GÉNÉRATION DE DM-RS POUR SIDELINK SUR LA BASE DE L'EMPLACEMENT D'UN ÉQUIPEMENT UTILISATEUR

(30) Priority: 10.08.2018 US 201862717096 P
(43) Date of publication of application: 16.06.2021
(73) Proprietor: INTEL Corporation, Santa Clara, CA 95054 (US)
(72) Inventor: KHORYAEV, Alexey, Novgorod, 603105 (RU); SHILOV, Mikhail, Novgorod, 603054 (RU); PANTELEEV, Sergey, W23 T86C (IE); ROTH, Kilian, 80469 München, BY (DE); GOMES BALTAR, Leonardo, 80804 München, BY (DE)
(74) Representative: HGF
(86) International application number: PCT/US2019/045862
(87) International publication number: WO 2020/033806

(56) References cited:
- US-A1- 2015 326 362
- US-A1- 2016 095 092
- US-A1- 2017 292 315
- "LTE; Evolved Universal Terrestrial Radio Access (E-UTRA); Physical channels and modulation (3GPP TS 36.211 version 13.10.0 Release 13)", ETSI TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. 3GPP RAN, no. V13.10.0 16 July 2018 (2018-07-16), pages 1-175, XP014320623, Retrieved from the Internet: URL:http://www.etsi.org/deliver/etsi_ts/13 6200_136299/136211/13.10.00_60/ts_136211v1 31000p.pdf [retrieved on 2018-07-16]
- "5G; NR; Physical channels and modulation (3GPP TS 38.211 version 15.2.0 Release 15)", ETSI TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. 3GPP RAN, no. V15.2.0 13 July 2018 (2018-07-13), pages 1-98, XP014319787, Retrieved from the Internet: URL:http://www.etsi.org/deliver/etsi_ts/13 8200_138299/138211/15.02.00_60/ts_138211v1 50200p.pdf [retrieved on 2018-07-13]
- ERICSSON: "DMRS design for two-port PSSCH transmission", Rl-1804635, 3GPP TSG RAN WG1 Meeting #92bis, vol. RAN WG1, 6 April 2018 (2018-04-06), XP051413324, Sanya, China
- INTEL CORPORATION: "v0n support of transmit diversity schemes for LTE V2V sidelink communication", R1-1804689, 3GPP TSG RAN WG1 Meeting #92bis, vol. RAN WG1, 7 April 2018 (2018-04-07), XP051414053, Sanya, China

## Description

### PRIORITY CLAIM

This application claims the benefit of priority to United States Provisional Patent Application Serial No. 62/717,096, filed August 10, 2018.

### TECHNICAL FIELD

Embodiments pertain to wireless communications. Some embodiments relate to wireless networks including 3GPP (Third Generation Partnership Project) networks, and 3GPP LTE (Long Term Evolution) networks, Fifth Generation (5G) networks, and/or New Radio (NR) networks. Some embodiments relate to sidelink communication, vehicle-to-vehicle (V2V) communication, vehicle-to-everything (V2X) communication, direct communication between mobile devices, and/or device-to-device (D2D) communication. Some embodiments relate to methods to generate demodulation reference signals (DM-RSs) for sidelink communication based on location information of a User Equipment (UE).

### BACKGROUND

Efficient use of the resources of a wireless network is important to provide bandwidth and acceptable response times to the users of the wireless network. However, often there are many devices trying to share the same resources and some devices may be limited by the communication protocol they use or by their hardware bandwidth. Moreover, wireless devices may need to operate with both newer protocols and with legacy device protocols. The 3GPP standard TS 36.211, version 13.10.0 Standard document D1 (para 9.8) discloses generating DMRS for PSSCH or PSCCH according to PUSCH in para 5.5.2.1, with some exceptions defined in table : 9.8-1.

### BRIEF DESCRIPTION OF THE DRAWINGS

FIG. 1A is a functional diagram of an example network in accordance with some embodiments;
FIG. 1B is a functional diagram of another example network in accordance with some embodiments;
FIG. 2 illustrates a block diagram of an example machine in accordance with some embodiments;
FIG. 3 illustrates an exemplary communication circuitry according to some aspects; and
FIG. 4 illustrates the operation of a method of communication in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

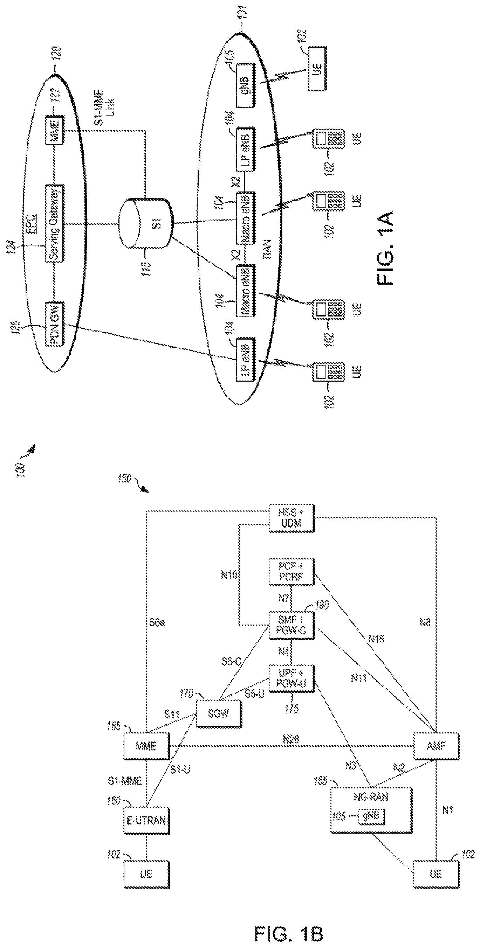

FIG. 1A is a functional diagram of an example network in accordance with some embodiments. FIG. 1B is a functional diagram of another example network in accordance with some embodiments. In references herein, "FIG. 1" may include FIG. 1A and FIG. 1B. In some embodiments, the network 100 may be a Third Generation Partnership Project (3GPP) network. In some embodiments, the network 150 may be a 3GPP network, a new radio (NR) network and/or Fifth Generation (5G) network. Other networks may be used in some embodiments. In some embodiments, a network may include one or more of: one or more components shown in FIG. 1A; one or more components shown in FIG. 1B; and one or more additional components. Some embodiments may not necessarily include all components shown in FIG. 1A and FIG. 1B.

The network 100 may comprise a radio access network (RAN) 101 and the core network 120 (e.g., shown as an evolved packet core (EPC)) coupled together through an S1 interface 115. For convenience and brevity sake, only a portion of the core network 120, as well as the RAN 101, is shown. In some embodiments, the RAN 101 may include one or more of: one or more components of an evolved universal terrestrial radio access network (E-UTRAN), one or more components of an NR network, and/or one or more other components.

The core network 120 may include a mobility management entity (MME) 122, a serving gateway (serving GW) 124, and packet data network gateway (PDN GW) 126. In some embodiments, the networks 100, 150 may include (and/or support) one or more Evolved Node-B's (eNBs) 104 and/or one or more Next Generation Node-B's (gNBs) 105. The eNBs 104 and/or gNBs 105 may operate as base stations for communicating with User Equipment (UE) 102. In some embodiments, one or more eNBs 104 may be configured to operate as gNBs 105. Embodiments are not limited to the number of eNBs 104 shown in FIG. 1A or to the number of gNBs 105 shown in FIG. 1B. Embodiments are also not limited to the connectivity of components shown in FIG. 1A.

It should be noted that references herein to an eNB 104 or to a gNB 105 are not limiting. In some embodiments, one or more operations, methods and/or techniques (such as those described herein) may be practiced by a base station component (and/or other component), including but not limited to a gNB 105, an eNB 104, a serving cell, a transmit receive point (TRP) and/or other. In some embodiments, the base station component may be configured to operate in accordance with one or more of: a 3GPP LTE protocol/standard, an NR protocol/standard, a Fifth Generation (5G) protocol/standard; and/or other protocol/standard, although the scope of embodiments is not limited in this respect.

Descriptions herein of one or more operations, techniques and/or methods practiced by a component (such as the UE 102, eNB 104, gNB 105 and/or other) are not limiting. In some embodiments, one or more of those operations, techniques and/or methods may be practiced by another component.

The MME 122 manages mobility aspects in access such as gateway selection and tracking area list management. The serving GW 124 terminates the interface toward the RAN 101, and routes data packets between the RAN 101 and the core network 120. In addition, it may be a local mobility anchor point for inter-eNB handovers and also may provide an anchor for inter-3GPP mobility. The serving GW 124 and the MME 122 may be implemented in one physical node or separate physical nodes.

In some embodiments, UEs 102, the eNB 104 and/or gNB 105 may be configured to communicate Orthogonal Frequency Division Multiplexing (OFDM) communication signals over a multicarrier communication channel in accordance with an Orthogonal Frequency Division Multiple Access (OFDMA) communication technique.

In some embodiments, the network 150 may include one or more components configured to operate in accordance with one or more 3GPP standards, including but not limited to an NR standard. The network 150 shown in FIG. 1B may include a next generation RAN (NG-RAN) 155, which may include one or more gNBs 105. In some embodiments, the network 150 may include the E-UTRAN 160, which may include one or more eNBs. The E-UTRAN 160 may be similar to the RAN 101 described herein, although the scope of embodiments is not limited in this respect.

In some embodiments, the network 150 may include the MME 165, which may be similar to the MME 122 described herein, although the scope of embodiments is not limited in this respect. In some embodiments, the network 150 may include the SGW 170, which may be similar to the SGW 124 described herein, although the scope of embodiments is not limited in this respect.

Embodiments are not limited to the number or type of components shown in FIG. 1B. Embodiments are also not limited to the connectivity of components shown in FIG. 1B.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware. Embodiments described herein may be implemented into a system using any suitably configured hardware and/or software.

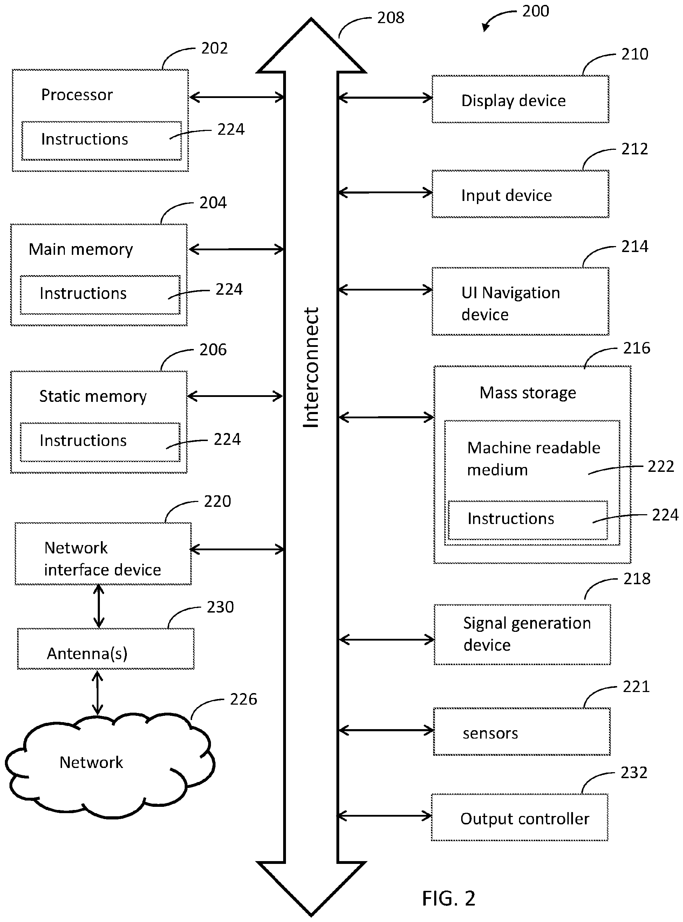

FIG. 2 illustrates a block diagram of an example machine in accordance with some embodiments. The machine 200 is an example machine upon which any one or more of the techniques and/or methodologies discussed herein may be performed. In alternative embodiments, the machine 200 may operate as a standalone device or may be connected (e.g., networked) to other machines. The machine 200 may be a UE 102, eNB 104, gNB 105, access point (AP), station (STA), user, device, mobile device, base station, another device, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples as described herein, may include, or may operate on, logic or a number of components, modules, or mechanisms.

The machine (e.g., computer system) 200 may include a hardware processor 202 (e.g., a central processing unit (CPU), a graphics processing unit (GPU), a hardware processor core, or any combination thereof), a main memory 204 and a static memory 206, some or all of which may communicate with each other via an interlink (e.g., bus) 208. The machine 200 may further include one or more of 210-228.

The storage device 216 may include a machine readable medium 222 on which is stored one or more sets of data structures or instructions 224 (e.g., software) embodying or utilized by any one or more of the techniques or functions described herein. The instructions 224 may also reside, completely or at least partially, within the main memory 204, within static memory 206, or within the hardware processor 202 during execution thereof by the machine 200. In an example, one or any combination of the hardware processor 202, the main memory 204, the static memory 206, or the storage device 216 may constitute machine readable media. In some embodiments, the machine readable medium may be or may include a non-transitory computer-readable storage medium. In some embodiments, the machine readable medium may be or may include a computer-readable storage medium.

While the machine readable medium 222 is illustrated as a single medium, the term "machine readable medium" may include a single medium or multiple media (e.g., a centralized or distributed database, and/or associated caches and servers) configured to store the one or more instructions 224. The term "machine readable medium" may include any medium that is capable of storing, encoding, or carrying instructions for execution by the machine 200 and that cause the machine 200 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine readable media may include non-transitory machine readable media. In some examples, machine readable media may include machine readable media that is not a transitory propagating signal.

The instructions 224 may further be transmitted or received over a communications network 226 using a transmission medium via the network interface device 220 utilizing any one of a number of transfer protocols. In an example, the network interface device 220 may include a plurality of antennas to wirelessly communicate using at least one of single-input multiple-output (SIMO), multiple-input multiple-output (MIMO), or multiple-input single-output (MISO) techniques. In some examples, the network interface device 220 may wirelessly communicate using Multiple User MIMO techniques. The term "transmission medium" shall be taken to include any intangible medium that is capable of storing, encoding or carrying instructions for execution by the machine 200, and includes digital or analog communications signals or other intangible medium to facilitate communication of such software.

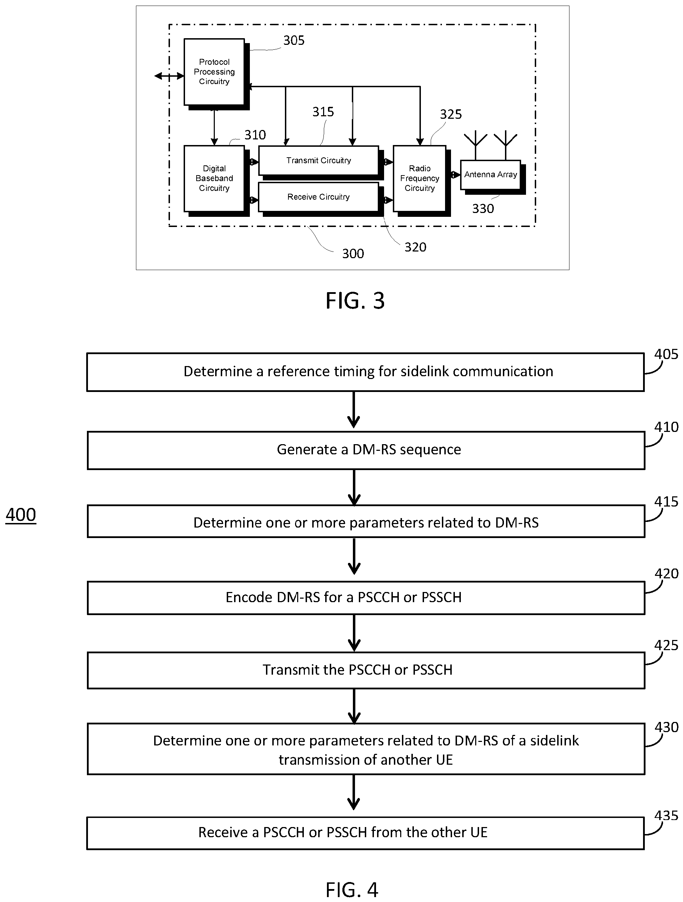

FIG. 3 illustrates an exemplary communication circuitry according to some aspects. It should be noted that a device, such as a UE 102, eNB 104, gNB 105, the machine 200 and/or other device may include one or more components of the communication circuitry 300, in some aspects. The communication circuitry 300 may include protocol processing circuitry 305, which may implement one or more of: medium access control (MAC), radio link control (RLC), packet data convergence protocol (PDCP), radio resource control (RRC) and non-access stratum (NAS) functions. The communication circuitry 300 may further include digital baseband circuitry 310, which may implement one or more physical layer (PHY) functions. The communication circuitry 300 may further include transmit circuitry 315, receive circuitry 320 and/or antenna array circuitry 330. The communication circuitry 300 may further include radio frequency (RF) circuitry 325. In an aspect of the disclosure, RF circuitry 325 may include multiple parallel RF chains for one or more of transmit or receive functions, each connected to one or more antennas of the antenna array 330.

In some embodiments, processing circuitry may perform one or more operations described herein and/or other operation(s). In a non-limiting example, the processing circuitry may include one or more components such as the processor 202, protocol processing circuitry 305, digital baseband circuitry 310, similar component(s) and/or other component(s).

In some embodiments, a transceiver may transmit one or more elements (including but not limited to those described herein) and/or receive one or more elements (including but not limited to those described herein). In a non-limiting example, the transceiver may include one or more components such as transmit circuitry 315, receive circuitry 320, radio frequency circuitry 325, similar component(s) and/or other component(s).

Although the UE 102, eNB 104, gNB 105, machine 200 and/or other device described herein may each be illustrated as having several separate functional elements, one or more of the functional elements may be combined and may be implemented by combinations of software-configured elements, such as processing elements including digital signal processors (DSPs), one or more microprocessors, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

It should be noted that in some embodiments, an apparatus of the UE 102, eNB 104, gNB 105, machine 200, and/or other device may include various components shown in FIGs. 2-3 and/or other components. Accordingly, techniques and operations described herein that are performed by a device may be performed by an apparatus of the device, in some embodiments.

In accordance with some embodiments, the UE 102 may encode, for a sidelink transmission to another UE 102 in frequency resources allocated for sidelink operation, a physical sidelink control channel (PSCCH) or a physical sidelink shared channel (PSSCH). The UE 102 may generate demodulation reference signals (DM-RSs) for the PSCCH or PSSCH. The UE 102 may generate an initialization value based on one or more parameters, wherein at least one of the parameters depends on location information of the UE 102. The UE 102 may generate a pseudo-random sequence based on a pseudo-random sequence generator that uses the initialization value. The UE 102 may generate a DM-RS sequence based on the pseudo-random sequence. The UE 102 may map at least a portion of the DM-RS sequence to a plurality of resource elements (REs) of the frequency resources allocated for sidelink operation. These embodiments are described in more detail below.

FIG. 4 illustrates the operation of a method of communication in accordance with some embodiments. Embodiments of the method 400 may include additional or even fewer operations or processes in comparison to what is illustrated in FIG. 4. Embodiments of the method 400 are not necessarily limited to the chronological order that is shown in FIG. 4.

In some embodiments, a UE 102 may perform one or more operations of the method 400, but embodiments are not limited to performance of the method 400 and/or operations of it by the UE 102. In some embodiments, a device and/or component (including but not limited to the UE 102, gNB 105 and/or eNB 104) may perform one or more operations that may be the same as, similar to, reciprocal to and/or related to an operation of the method 400.

Discussion of various operations, techniques and/or concepts regarding one method described herein (such as the method 400 and/or other) may be applicable to other operations described herein and/or other methods described herein. One or more of the techniques, operations and/or methods described herein may be performed by a device other than an eNB 104, gNB 105, and UE 102, including but not limited to a Wi-Fi access point (AP), station (STA) and/or other.

In some embodiments, an apparatus of a device (including but not limited to the UE 102, eNB 104, gNB 105 and/or other) may comprise memory that is configurable to store one or more elements, and the apparatus may use them for performance of one or more operations. The apparatus may include processing circuitry, which may perform one or more operations (including but not limited to operation(s) of the method 400 and/or other methods described herein). The processing circuitry may include a baseband processor. The baseband circuitry and/or the processing circuitry may perform one or more operations described herein. The apparatus may include a transceiver to transmit and/or receive one or more blocks, messages and/or other elements.

Embodiments are not limited by references herein to transmission, reception and/or exchanging of elements such as frames, messages, requests, indicators, signals or other elements. In some embodiments, such an element may be generated, encoded or otherwise processed by processing circuitry for transmission by a transceiver or other component cases. In some embodiments, such an element may be received by a transceiver or other component, and may be decoded, detected or otherwise processed by processing circuitry. In some embodiments, the processing circuitry and the transceiver may be included in a same apparatus. In some embodiments, the transceiver may be separate from the apparatus that comprises the processing circuitry, in some embodiments.

One or more of the elements (such as messages, operations and/or other) described herein may be included in a 3GPP protocol, 3GPP LTE protocol, 4G protocol, 5G protocol, NR protocol and/or other protocol, but embodiments are not limited to usage of those elements. In some embodiments, other elements may be used, including other element(s) in a same standard/protocol, other element(s) in another standard/protocol and/or other. In addition, the scope of embodiments is not limited to usage of elements that are included in standards.

In some embodiments, the UE 102, eNB 104 and/or gNB 105 may be arranged to operate in accordance with a 3GPP protocol, NR protocol, and/or other protocol.

At operation 405, the UE 102 may determine a reference timing for sidelink communication. At operation 410, the UE 102 may generate a demodulation reference signal (DM-RS) sequence. At operation 415, the UE 102 may determine one or more parameters related to DM-RS. At operation 420, the UE 102 may encode DM-RS for a PSCCH or PSSCH. At operation 425, the UE 102 may transmit the PSCCH or PSSCH.

In some embodiments, the UE 102 may encode, for a sidelink transmission to another UE 102 in frequency resources allocated for sidelink operation, a physical sidelink control channel (PSCCH) or a physical sidelink shared channel (PSSCH). The UE 102 may generate demodulation reference signals (DM-RSs) for the PSCCH or PSSCH. The UE 102 may generate an initialization value based on one or more parameters, wherein at least one of the parameters depends on location information of the the UE 102. The UE 102 may generate a pseudo-random sequence based on a pseudo-random sequence generator that uses the initialization value. The UE 102 may generate a DM-RS sequence based on the pseudo-random sequence. The UE 102 may map at least a portion of the DM-RS sequence to a plurality of resource elements (REs) of the frequency resources allocated for sidelink operation.

In some embodiments, the location information of the UE 102 may include one or more of: coordinates at which the UE 102 is located, a zone in which the UE 102 is located, a road on which the UE 102 is located, and a lane of the road on which the UE 102 is located.

In some embodiments, one of the parameters that depends on the location information of the UE 102 may be a sidelink DMRS scrambling identifier (SL-DMRS-Scrambling-ID) for scrambling of sidelink transmissions. In some embodiments, one of the parameters that depends on the location information of the UE 102 may be a sidelink pool identifier (SL-Pool-ID). In some embodiments, one of the parameters that depends on the location information of the UE 102 may be a slot number associated with a scrambling identifier (ID).

In some embodiments, a location of the UE 102 may be relevant to a DM-RSs, SL-Pool-IDs and/or other. In some embodiments, UEs 102 in one area may be given the same identifier (such as the SL-Pool-ID and/or other) so that they use the same pool. In some embodiments, the UEs 102 in one area may be given different identifiers (such as the SL-Pool-ID and/or other). Accordingly, DM-RSs (and/or other elements) of those UEs 102 may be different as a result.

In some embodiments, the UE 102 may generate the initialization value based on: 1) a first term that is based on a sum of the number one, an orthogonal frequency division multiplexing (OFDM) symbol number of the DM-RSs within a slot, and a product of a number of symbols per slot and a slot number within a frame; 2) a second term that is based on a sum of the number one and a product of the number two and a scrambling identifier (ID); and 3) a third term. The third term may be based on a sum of: a product of the number two raised to a power equal to 17, the first term, and the second term; a product of the number two and the scrambling ID; and a slot number associated with the scrambling ID. The initialization value may be based on a result of a modulo operation performed on the third term, using a modulus of the number two raised to a power equal to 31. Embodiments are not limited to the numbers used in the above (such as 2, 17, 31, and/or other). Embodiments are also not limited to the number of terms used in the above and are not limited to the particular terms given above (the first, second, and third terms). One or more similar terms may be used, in some embodiments. In some embodiments, the scrambling ID or the slot number associated with the scrambling ID may depend on the location information of the UE 102. Embodiments are not limited to the above techniques, as similar terms and/or operations may be used in some embodiments.

In some embodiments, the UE 102 may generate a real part of the DM-RS sequence based on a difference between: the number one; and a product of the number two and a first sub-sequence of the pseudo-random sequence. The UE 102 may generate an imaginary part of the DM-RS sequence based on a difference between: the number one; and a product of the number two and a second sub-sequence of the pseudo-random sequence. Embodiments are not limited to the numbers or computations given above, as similar numbers and/or computations may be used, in some embodiments.

In a non-limiting example, the first sub-sequence may include terms of the pseudo-random sequence for which corresponding indexes are even (such as c(n) for n = 0, 1, 2, ....), and the second sub-sequence may include terms of the pseudo-random sequence for which corresponding indexes are odd (such as c(2*n + 1) for n = 0, 1, 2, ....). In some embodiments, c(n) may be based on sections of a gold sequence with a specific initialization value and start value that indicates one or more parts used for c(n).

In some embodiments, the UE 102 may determine a reference timing for the sidelink transmission based on reception of a synchronization signal or a positioning signal. Examples of the synchronization signal may include, but are not limited to: a primary synchronization signal (PSS), secondary synchronization signal (SSS), and a sidelink synchronization signal (SLSS). Examples of the positioning signal may include, but are not limited to: Global Positioning System (GPS), and Global Navigation Satellite System. (GNSS). In some embodiments, the UE 102 may determine the reference timing based on GNSS derived for a network (NR Uu or LTE Uu interface). In some embodiments, the UE 102 may determine the reference timing based on mutual synchronization via the synchronization channel.

In some embodiments, the UE 102 may determine the location information of the UE 102. In a non-limiting example, a GPS module on the UE 102 may determine location coordinates. In another non-limiting example, the UE 102 may determine location information based on one or more received signals. In some embodiments, the UE 102 may receive the location information as part of the control information received in a corresponding control channel transmission. In some embodiments, some or all cars or other devices communicating via V2X (and/or other protocol, including but not limited to those described herein) may be equipped with a GNSS to derive the location from it. In some cases, this may be required for some applications running on NR V2X (and/or other protocol, including but not limited to those described herein).

In some embodiments, the UE 102 may receive signaling that indicates the location information of the UE 102 In a non-limiting example, an eNB 104 or gNB 105 may determine the location information, and may transmit the location information to the UE 102.

In some embodiments, the sidelink transmission may be one of: a vehicle-to-everything (V2X) transmission, an enhanced V2X (eV2X) transmission, and a vehicle-to-vehicle (V2V) transmission. Embodiments are not limited to the above types of sidelink transmission, however. One or more of the techniques, operations and/or methods described herein may use any suitable type of sidelink transmission, in some embodiments.

In some embodiments, the UE 102 may generate the initialization value based on location information of the UE 102 to reduce co-channel interference between sidelink transmissions of two UEs 102 in different locations when the sidelink transmissions are performed in overlapping time resources and frequency resources.

In some embodiments, the UE 102 may generate demodulation reference signals (DM-RSs) for the PSCCH or PSSCH. One or more parameters based on location information of the UE 102 may be used to generate one or more of: a pattern of resource elements (REs), of the frequency resources allocated for sidelink operation, used for the DM-RSs; a code-division multiplexing (CDM) group of the DM-RSs; an orthogonal cover code (OCC) for the DM-RSs; a cyclic shift for the DM-RSs; one or more parameters related to DM-RSs; and/or other.

At operation 430, the UE 102 may determine one or more parameters related to DM-RS of a sidelink transmission of another UE 102. At operation 435, the UE 102 may receive a PSCCH or PSSCH from the other UE 102. In some embodiments, the UE 102 may perform one or more of operations 405-425 as part of a sidelink transmission by the UE 102. In some embodiments, the UE 102 may perform one or more of operations 430-435 as part of a sidelink reception from another UE 102. The scope of embodiments is not limited in this respect, however. The UE 102 may use any of operations 405-435 (and/or similar operations and/or reciprocal operations) as part of the sidelink reception, in some embodiments. In addition, the UE 102 may use any of operations 405-435 (and/or similar operations and/or reciprocal operations) as part of sidelink transmission, in some embodiments.

In some embodiments, the UE 102 may detect one or more sidelink transmissions from another UE 102. The UE 102 may determine location information of the other UE 102 based on one or more of: signaling (such as from the other UE 102, the eNB 104, the gNB 105 and/or other); detected sidelink transmissions; and/or other. The UE 102 may determine, based on the location information of the other UE 102, one or more parameters of DM-RSs to be transmitted by the other UE 102 in a PSCCH or in a PSSCH. The UE 102 may decode the PSCCH or PSSCH based on channel estimation using the determined one or more parameters of the DM-RSs.

In some embodiments, one or more parameters of the DM-RSs to be transmitted by the other UE 102 may include one or more of: a DM-RS sequence, a pseudo-random sequence on which the DM-RS sequence is based, an initialization value of a pseudo-random sequence generator to generate the pseudo-random sequence, resource elements (REs) used for the DM-RSs, a code-division multiplexing (CDM) group of the DM-RSs, an orthogonal cover code (OCC) for the DM-RSs, a cyclic shift for the DM-RSs, and/or other.

It should be noted that descriptions herein may refer to sidelink communication, V2V communication, V2X communication, but the scope of embodiments is not limited in this respect. For instance, descriptions herein may refer to one or more techniques, operations, and/or methods that include sidelink communication, V2V communication, and/or V2X communication. It is understood that one or more of those techniques, operations, and/or methods may include one or more of: direct communication between mobile devices, device-to-device (D2D) communication, off-network communication, communication between two devices that may not necessarily include communication with a network, and/or other communication.

## Claims

1. An apparatus of a User Equipment (UE), the apparatus comprising: memory; and processing circuitry, configured to:
encode, for a sidelink transmission to another UE in frequency resources allocated for sidelink operation, a physical sidelink control channel (PSCCH) or a physical sidelink shared channel (PSSCH);
generate demodulation reference signals (DM-RSs) for the PSCCH or PSSCH, wherein the processing circuitry is configured to:
generate an initialization value based on one or more parameters, wherein at least one of the parameters depends on location information of the UE;
generate a pseudo-random sequence based on a pseudo-random sequence generator that uses the initialization value;
generate a DM-RS sequence based on the pseudo-random sequence; and
map at least a portion of the DM-RS sequence to a plurality of resource elements (REs) of the frequency resources allocated for sidelink operation,
wherein the memory is configured to store at least a portion of the pseudo-random sequence.

2. The apparatus according to claim 1, wherein the location information of the UE includes one or more of: coordinates at which the UE is located, a zone in which the UE is located, a road on which the UE is located, and a lane of the road on which the UE is located.

3. The apparatus according to claim 1, wherein one of the parameters that depends on the location information of the UE is a sidelink DMRS scrambling identifier (SL-DMRS-Scrambling-ID) for scrambling of sidelink transmissions.

4. The apparatus according to claim 1, wherein one of the parameters that depends on the location information of the UE is a sidelink pool identifier (SL-Pool-ID).

5. The apparatus according to claim 1, wherein one of the parameters that depends on the location information of the UE is a slot number associated with a scrambling identifier (ID).

6. The apparatus according to claim 1, the processing circuitry further configured to:
generate the initialization value based on:
a first term that is based on a sum of the number one, an orthogonal frequency division multiplexing (OFDM) symbol number of the DM-RSs within a slot, and a product of a number of symbols per slot and a slot number within a frame,
a second term that is based on a sum of the number one and a product of the number two and a scrambling identifier (ID),
a third term that is based on a sum of:
a product of the number two raised to a power equal to 17, the first term, and the second term,
a product of the number two and the scrambling ID, and
a slot number associated with the scrambling ID, and
wherein the initialization value is based on a result of a modulo operation performed on the third term, using a modulus of the number two raised to a power equal to 31.

7. The apparatus according to claim 6, wherein the scrambling ID or the slot number associated with the scrambling ID depend on the location information of the UE.

8. The apparatus according to claim 1, the processing circuitry further configured to:
generate a real part of the DM-RS sequence based on a difference between:
the number one, and
a product of the number two and a first sub-sequence of the pseudo-random sequence; and
generate an imaginary part of the DM-RS sequence based on a difference between:
the number one, and
a product of the number two and a second sub-sequence of the pseudo-random sequence

9. The apparatus according to claim 1, the processing circuitry further configured to:
determine a reference timing for the sidelink transmission based on reception of a synchronization signal or a positioning signal.

10. The apparatus according to claim 1, the processing circuitry further configured to:
determine the location information of the UE, or
decode signaling that indicates the location information of the UE.

11. The apparatus according to claim 1, wherein the sidelink transmission is one of: a vehicle-to-everything (V2X) transmission, an enhanced V2X (eV2X) transmission, and a vehicle-to-vehicle (V2V) transmission.

12. The apparatus according to claim 1, wherein the processing circuitry is configured to:
generate the initialization value based on location information of the UE to reduce co-channel interference between sidelink transmissions of two UEs in different locations when the sidelink transmissions are performed in overlapping time resources and frequency resources.

13. The apparatus of claim 1, wherein:
the processing circuitry includes a baseband processor to encode the PSCCH or the PSSCH,
the apparatus further comprises a transceiver to transmit the PSCCH or the PSSCH.

14. A computer-readable storage medium that stores instructions for execution by processing circuitry of a User Equipment (UE), the operations to configure the processing circuitry to:
encode, for a sidelink transmission to another UE in frequency resources allocated for sidelink operation, a physical sidelink control channel (PSCCH) or a physical sidelink shared channel (PSSCH);
generate demodulation reference signals (DM-RSs) for the PSCCH or PSSCH, wherein one or more parameters based on location information of the UE are used to generate one or more of:
a pattern of resource elements (REs), of the frequency resources allocated for sidelink operation, used for the DM-RSs,
a code-division multiplexing (CDM) group of the DM-RSs,
an orthogonal cover code (OCC) for the DM-RSs, and
a cyclic shift for the DM-RSs.

15. The computer-readable storage medium according to claim 14, wherein one of the parameters based on the location information of the UE is a sidelink pool identifier (SL-Pool-ID).

## Patentansprüche

1. Vorrichtung eines Benutzergeräts (UE), die Vorrichtung Folgendes umfassend: einen Speicher; und einen Verarbeitungsschaltkomplex, der eingerichtet ist, um
für eine Sidelink-Übertragung an ein anderes UE in Frequenzressourcen, die Sidelink-Betrieb zugeordnet sind, einen physikalischen Sidelink-Steuerkanal (PSCCH) oder einen physikalischen gemeinsam genutzten Sidelink-Kanal (PSSCH) zu codieren;
Demodulationsreferenzsignale (DM-RSs) für den PSCCH oder den PSSCH zu erzeugen, wobei der Verarbeitungsschaltkomplex eingerichtet ist, um:
einen Initialisierungswert auf der Grundlage eines oder mehrerer Parameter zu erzeugen, wobei mindestens einer der Parameter von Standortinformationen des UE abhängt;
eine Pseudozufallssequenz auf der Grundlage eines Pseudozufallssequenzgenerators zu erzeugen, der den Initialisierungswert verwendet;
eine DM-RS-Sequenz auf der Grundlage der Pseudozufallssequenz zu erzeugen; und
mindestens einen Abschnitt der DM-RS-Sequenz auf eine Vielzahl von Ressourcenelementen (REs) der Frequenzressourcen abzubilden, die Sidelink-Betrieb zugeordnet sind,
wobei der Speicher eingerichtet ist, um mindestens einen Abschnitt der Pseudozufallssequenz zu speichern.

2. Vorrichtung nach Anspruch 1, wobei die Standortinformationen des UE eines oder mehreres des Folgenden umfassen: Koordinaten, bei denen das UE lokalisiert ist, eine Zone, in der das UE lokalisiert ist, eine Straße, auf der das UE lokalisiert ist, und ein Fahrstreifen der Straße, auf der das UE lokalisiert ist.

3. Vorrichtung nach Anspruch 1, wobei einer der Parameter, der von den Standortinformationen des UE abhängt, eine Sidelink-DMRS-Verwürfelungskennung (SL-DMRS-Verwürfelungs-ID) zur Verwürfelung von Sidelink-Übertragungen ist.

4. Vorrichtung nach Anspruch 1, wobei einer der Parameter, der von den Standortinformationen des UE abhängt, eine Sidelink-Poolkennung (SL-Pool-ID) ist.

5. Vorrichtung nach Anspruch 1, wobei einer der Parameter, der von den Standortinformationen des UE abhängt, eine Schlitzzahl ist, die einer Verwürfelungskennung (ID) zugeordnet ist.

6. Vorrichtung nach Anspruch 1, wobei der Verarbeitungsschaltkomplex weiterhin eingerichtet ist, um:
den Initialisierungswert auf folgender Grundlage zu erzeugen:
eines ersten Terms, der auf einer Summe der Zahl eins, einer Orthogonalfrequenzmultiplex-(OFDM)-Symbolzahl der DM-RSs in einem Schlitz und eines Produkts einer Anzahl von Symbolen pro Schlitz und einer Schlitzzahl in einem Frame basiert,
eines zweiten Terms, der auf einer Summe der Zahl eins und eines Produkts der Zahl zwei und einer Verwürfelungskennung (ID) basiert,
eines dritten Terms, der auf einer folgenden Summe basiert:
eines Produkts der Zahl zwei hoch 17, des ersten Terms und des zweiten Terms,
eines Produkts der Zahl zwei und der Verwürfelungs-ID und
einer Schlitzzahl, die der Verwürfelungs-ID zugeordnet ist, und
wobei der Initialisierungswert auf einem Ergebnis einer Modulo-Operation basiert, die auf dem dritten Term unter Verwendung eines Modulus der Zahl zwei hoch 31 durchgeführt wird.

7. Vorrichtung nach Anspruch 6, wobei die Verwürfelungs-ID oder die Schlitzzahl, die der Verwürfelungs-ID zugeordnet ist, von den Standortinformationen des UE abhängen.

8. Vorrichtung nach Anspruch 1, wobei der Verarbeitungsschaltkomplex weiterhin eingerichtet ist, um:
einen realen Teil der DM-RS-Sequenz zu erzeugen auf der Grundlage einer Differenz zwischen:
der Zahl eins und
einem Produkt der Zahl zwei und einer ersten Subsequenz der Pseudozufallssequenz; und
einen imaginären Teil der DM-RS-Sequenz zu erzeugen auf der Grundlage einer Differenz zwischen:
der Zahl eins und
einem Produkt der Zahl zwei und einer zweiten Subsequenz der Pseudozufallssequenz.

9. Vorrichtung nach Anspruch 1, wobei der Verarbeitungsschaltkomplex weiterhin eingerichtet ist, um:
ein Referenzzeitverhalten für die Sidelink-Übertragung auf der Grundlage eines Empfangs eines Synchronisationssignals oder eines Positioniersignals zu bestimmen.

10. Vorrichtung nach Anspruch 1, wobei der Verarbeitungsschaltkomplex weiterhin eingerichtet ist, um:
die Standortinformationen des UE zu bestimmen oder
eine Signalisierung zu decodieren, welche die Standortinformationen des UE angibt.

11. Vorrichtung nach Anspruch 1, wobei die Sidelink-Übertragung eine der folgenden ist: eine Fahrzeug-zu-Alles-(V2X)-Übertragung, eine verbesserte V2X-(eV2X)-Übertragung und eine Fahrzeug-zu-Fahrzeug-(V2V)-Übertragung.

12. Vorrichtung nach Anspruch 1, wobei der Verarbeitungsschaltkomplex eingerichtet ist, um:
den Initialisierungswert auf der Grundlage von Standortinformationen des UE zu erzeugen, um eine Gleichkanalstörung zwischen Sidelink-Übertragungen von zwei UEs an verschiedenen Standorten zu reduzieren, wenn die Sidelink-Übertragungen in überlappenden Zeitressourcen und Frequenzressourcen durchgeführt werden.

13. Vorrichtung nach Anspruch 1, wobei:
der Verarbeitungsschaltkomplex einen Basisbandprozessor umfasst, um den PSCCH oder den PSSCH zu codieren,
die Vorrichtung weiterhin einen Sendeempfänger umfasst, um den PSCCH oder den PSSCH zu übertragen.

14. Computerlesbares Speichermedium, das Befehle zur Ausführung durch einen Verarbeitungsschaltkomplex eines Benutzergeräts (UE) der Operationen speichert, um den Verarbeitungsschaltkomplex zu konfigurieren, um:
für eine Sidelink-Übertragung an ein anderes UE in Frequenzressourcen, die Sidelink-Betrieb zugeordnet sind, einen physikalischen Sidelink-Steuerkanal (PSCCH) oder einen physikalischen gemeinsam genutzten Sidelink-Kanal (PSSCH) zu codieren;
Demodulationsreferenzsignale (DM-RSs) für den PSCCH oder den PSSCH zu erzeugen, wobei ein oder mehrere Parameter auf der Grundlage von Standortinformationen des UE verwendet werden, um eines oder mehreres des Folgenden zu erzeugen:
ein Muster von Ressourcenelementen (REs) der einem Sidelink-Betrieb zugeordneten Frequenzressourcen, die für die DM-RSs verwendet werden,
eine Codemultiplex-(CDM)-Gruppe der DM-RSs,
einen orthogonalen Deckcode (OCC) für die DM-RSs und
eine zyklische Verschiebung für die DM-RSs.

15. Computerlesbares Speichermedium nach Anspruch 14, wobei einer der Parameter auf der Grundlage der Standortinformationen des UE eine Sidelink-Poolkennung (SL-Pool-ID) ist.

## Revendications

1. Appareil d'un équipement utilisateur (UE), l'appareil comprenant : une mémoire ; et un circuit de traitement, configuré pour :
coder, pour une transmission Sidelink vers un autre UE dans des ressources de fréquence attribuées pour un fonctionnement en mode Sidelink, un canal de commande physique Sidelink (PSCCH) ou un canal partagé physique Sidelink (PSSCH) ;
générer des signaux de référence de démodulation (DM-RS) pour le PSCCH ou le PSSCH, le circuit de traitement étant configuré pour :
générer une valeur d'initialisation sur la base d'un ou plusieurs paramètres, au moins l'un des paramètres dépendant des informations d'emplacement de l'UE ;
générer une séquence pseudo-aléatoire sur la base d'un générateur de séquence pseudo-aléatoire qui utilise la valeur d'initialisation ;
générer une séquence DM-RS sur la base de la séquence pseudo-aléatoire ; et
mettre en correspondance au moins une partie de la séquence DM-RS avec une pluralité d'éléments de ressources (RE) des ressources de fréquence attribuées pour le fonctionnement en mode Sidelink,
la mémoire étant configurée pour stocker au moins une partie de la séquence pseudo-aléatoire.

2. Appareil selon la revendication 1, les informations d'emplacement de l'UE comprenant un ou plusieurs des éléments suivants : des coordonnées auxquelles l'UE est situé, une zone dans laquelle l'UE est situé, une route sur laquelle l'UE est situé, et une voie de la route sur laquelle l'UE est situé.

3. Appareil selon la revendication 1, l'un des paramètres qui dépend des informations d'emplacement de l'UE étant un identifiant d'embrouillage DMRS Sidelink (SL-DMRS-Scrambling-ID) pour l'embrouillage des transmissions Sidelink.

4. Appareil selon la revendication 1, l'un des paramètres qui dépend des informations d'emplacement de l'UE étant un identifiant de pool Sidelink (SL-Pool-ID).

5. Appareil selon la revendication 1, l'un des paramètres qui dépend des informations d'emplacement de l'UE étant un numéro de créneau associé à un identifiant d'embrouillage (ID).

6. Appareil selon la revendication 1, le circuit de traitement étant configuré en outre pour :
générer la valeur d'initialisation sur la base de :
un premier terme qui est basé sur la somme du nombre un, d'un numéro de symbole de multiplexage par répartition orthogonale de la fréquence (OFDM) des DM-RS à l'intérieur d'un créneau, et d'un produit du nombre de symboles par créneau et d'un numéro de créneau à l'intérieur d'une trame,
un deuxième terme qui est basé sur la somme du nombre un et du produit du nombre deux et d'un identifiant d'embrouillage (ID),
un troisième terme qui est basé sur la somme de :
un produit du nombre deux élevé à une puissance égale à 17, le premier terme, et le deuxième terme,
le produit du nombre deux et de l'ID de brouillage, et
un numéro de créneau associé à l'ID d'embrouillage, et
la valeur d'initialisation étant basée sur le résultat d'une opération module effectuée sur le troisième terme, en utilisant un module du nombre deux élevé à une puissance égale à 31.

7. Appareil selon la revendication 6, l'ID d'embrouillage ou le numéro de créneau associé à l'ID d'embrouillage dépendant des informations d'emplacement de l'UE.

8. Appareil selon la revendication 1, le circuit de traitement étant en outre configuré pour :
générer une partie réelle de la séquence DM-RS sur la base d'une différence entre :
le nombre un, et
le produit du nombre deux et d'une première sous-séquence de la séquence pseudo-aléatoire ; et
générer une partie imaginaire de la séquence DM-RS sur la base d'une différence entre :
le nombre un, et
le produit du nombre deux et d'une deuxième sous-séquence de la séquence pseudo-aléatoire.

9. Appareil selon la revendication 1, le circuit de traitement étant en outre configuré pour :
déterminer une synchronisation de référence pour la transmission Sidelink sur la base de la réception d'un signal de synchronisation ou d'un signal de positionnement.

10. Appareil selon la revendication 1, le circuit de traitement étant configuré en outre pour :
déterminer les informations d'emplacement de l'UE, ou
décoder la signalisation qui indique les informations d'emplacement de l'UE.

11. Appareil selon la revendication 1, la transmission Sidelink étant l'une des suivantes : une transmission de véhicule à tout (V2X), une transmission V2X améliorée (eV2X), et une transmission de véhicule à véhicule (V2V).

12. Appareil selon la revendication 1, le circuit de traitement étant configuré pour :
générer la valeur d'initialisation sur la base des informations d'emplacement de l'UE afin de réduire les interférences dans le même canal entre les transmissions Sidelink de deux UE situés dans des emplacements différents lorsque les transmissions Sidelink sont effectuées dans des ressources temporelles et des ressources de fréquence qui se chevauchent.

13. Appareil selon la revendication 1,
le circuit de traitement comprenant un processeur en bande de base pour coder le PSCCH ou le PSSCH,
l'appareil comprenant en outre un émetteurrécepteur pour transmettre le PSCCH ou le PSSCH.

14. Support de stockage lisible par ordinateur stockant des instructions destinées pour l'exécution par les circuits de traitement d'un équipement d'utilisateur (UE), des opérations de configuration des circuits de traitement pour :
coder, pour une transmission Sidelink vers un autre UE dans des ressources de fréquence attribuées pour un fonctionnement en mode Sidelink, un canal de commande physique Sidelink (PSCCH) ou un canal partagé physique Sidelink (PSSCH) ;
générer des signaux de référence de démodulation (DM-RS) pour le PSCCH ou le PSSCH, un ou plusieurs paramètres basés sur des informations d'emplacement de l'UE étant utilisés pour générer un ou plusieurs des éléments suivants :
un schéma d'éléments de ressource (RE), des ressources de fréquence attribuées pour le fonctionnement en mode Sidelink, utilisés pour les DM-RS,
un groupe de multiplexage par répartition des codes (CDM) des DM-RS,
un code de couverture orthogonal (OCC) pour les DM-RS, et
un décalage cyclique pour les DM-RS.

15. Support de stockage lisible par ordinateur selon la revendication 14, l'un des paramètres basés sur les informations d'emplacement de l'UE étant un identifiant de pool Sidelink (SL-Pool-ID).
